# FASCICULE DE BREVET EUROPEEN

(11) **EP 1 827 925 B1**
(45) Date de publication et mention de la délivrance du brevet: **05.10.2011**
(21) Numéro de dépôt: 05809101.8
(22) Date de dépôt: 05.10.2005
(51) Int. Cl.: B60R 22/48

(54) **BOUCLE DE CEINTURE DE SECURITE POUR VEHICULE AUTOMOBILE**
SICHERHEITSGURTSCHNALLE FÜR KRAFTFAHRZEUG
SAFETY BELT BUCKLE FOR MOTOR VEHICLE

(30) Priorité: 07.10.2004 FR 0410577
(43) Date de publication de la demande: 05.09.2007
(73) Titulaire: Leoni Wiring Systems France, 78180 Montigny le Bretonneux (FR)
(72) Inventeur: MAZIERE, Jean-François, F-78190 Trappes (FR); SAIDANI, Faouzi, F-92160 Antony (FR)
(74) Mandataire: Eidelsberg, Olivier Nathan
(86) Numéro de dépôt international: PCT/FR2005/002442
(87) Numéro de publication internationale: WO 2006/040437

(56) Documents cités:
- WO-A-03/078218
- DE-A1- 10 033 403
- FR-A- 2 553 640
- US-A- 5 590 904

## Description

La présente invention se rapporte à une boucle de ceinture de sécurité pour véhicule automobile.

Les boucles de ceinture de sécurité comprennent généralement un élément femelle relié à un point fixe du véhicule et un élément mâle présentant un pêne destiné à s'insérer dans un logement de la partie femelle, celle-ci étant pourvue de moyens de verrouillage dudit pêne.

Etant donné que le port de la ceinture est obligatoire, les véhicules modernes comportent des moyens de signalisation afin d'indiquer au conducteur et aux passagers éventuels que leur ceinture n'est pas bouclée. Ces moyens de signalisation sont généralement constitués d'un icône affiché au tableau de bord ou d'un signal sonore et éventuellement des deux.

L'élément femelle comporte, généralement, des contacts insérés sur un circuit d'alimentation des moyens de signalisation, contacts qui sont fermés pour que lesdits moyens de signalisation soient alimentés et qui sont ouverts par l'introduction du pêne de l'élément mâle.

Généralement, l'élément femelle comporte intérieurement une barrette isolante montée coulissante contre l'action d'un ressort et destinée, lors de l'introduction du pêne, a être déplacée par celui-ci pour s'insérer entre les contacts.

La ceinture de sécurité est bouclée et débouclée un nombre très important de fois surtout pour des véhicules utilisés en milieu urbain et on a constaté que les frottements répétés de la barrette sur les contacts engendraient une usure prématurée de ceux-ci et qu'ainsi les moyens de signalisation risquaient de ne plus être activés.

De US-A-5590904 il est connu une boucle de ceinture suivant le préambule de la revendication 1. L'un des buts de l'invention est de remédier à cet inconvénient.

La boucle de sécurité, selon l'invention, est du type comprenant un élément femelle constitué par un boîtier isolant dans lequel sont logés des circuits d'alimentation électriques de moyens de signalisation de la fermeture, ou de l'ouverture de la boucle, lesdits circuits comprenant des contacts électriques maintenus en position de fermeture et susceptibles d'être écartés par une barrette isolante mobile dans le boîtier contre l'action de moyens élastiques, et un élément mâle monté sur la ceinture et présentant un pêne destiné à être engagé dans une fente de l'élément femelle et à être bloqué dans celle-ci par des organes déverrouillables, l'introduction dudit pêne dans la fente engendrant le déplacement de la barrette qui commande l'ouverture des contacts électriques, ladite boucle de ceinture de sécurité étant caractérisée en ce que les contacts électriques sont portés par deux languettes, une première languette comportant une partie en V avec deux branches dont l'une constitue un contact électrique, et une extrémité cambrée, les convexités de ces deux parties étant tournées en regard de la seconde languette qui présente une partie en V avec deux branches dont l'une constitue un contact électriques et est destinée à porter contre le contact électrique de la première languette, la partie cambrée étant destinée à coopérer avec la barrette pour commander l'ouverture des contacts électriques.

Grâce à cette disposition, on sépare la zone de contact électrique de la zone de contact mécanique, en effet, la barrette isolante mobile ne portera pas sur les contacts électriques et les séparations ou l'application l'un sur l'autre de ceux-ci s'effectuera sans frottements importants.

Suivant une variante de réalisation, la seconde languette est prolongée par une partie cambrée dont la convexité est tournée en regard de la partie cambrée de la première languette.

La partie cambrée de l'une des languettes est percée d'une ouverture dans laquelle s'insère la partie cambrée de l'autre languette.

Enfin, les contacts électriques sont du type à contact glissant.

L'invention va maintenant être décrite avec plus de détails en se référant à des modes de réalisation particuliers donnés à titre d'exemple seulement et représentés au dessins annexés.
Figure 1 montre schématiquement avec des arrachements une boucle de ceinture lors de la mise en place du pêne.
Figure 2 est une vue similaire à la figure 1, le pêne étant engagé et verrouillé.
Figure 3 est une vue en perspective d'un détail.
Figure 4 et figure 5 sont des vues schématiques en perspective montrant le fonctionnement.
Figure 6 et figure 7 sont des vues en perspective montrant une variante de l'invention.

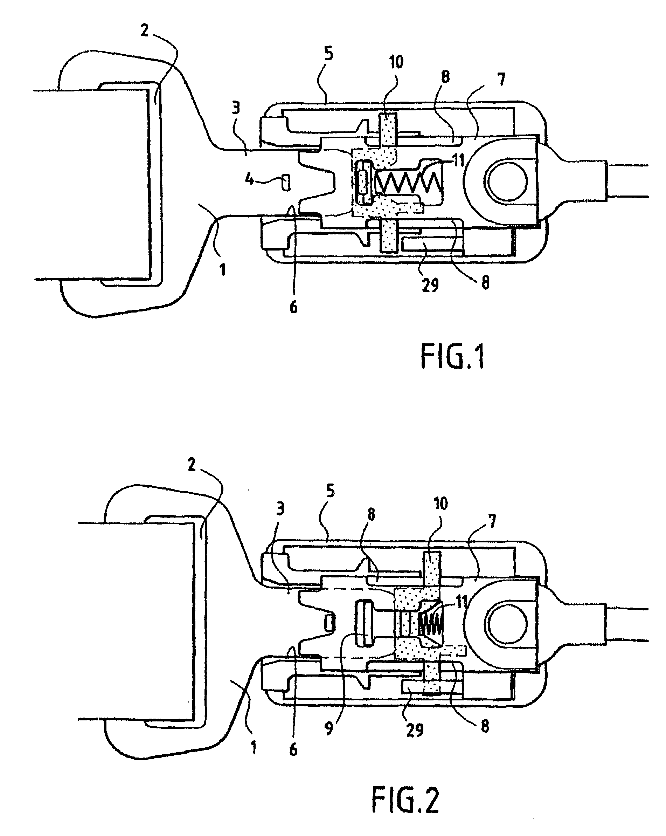

La boucle de ceinture de sécurité représentée aux figures 1 à 5 comprend un élément mâle 1 présentant une fente 2 pour le passage de la ceinture et terminé par un pêne 3 avec une ouverture 4 destinée à recevoir un crochet de verrouillage.

La boucle est complétée par un élément femelle 5 formée d'un boîtier isolant avec une fente 6 pour l'introduction du pêne 3 et des moyens d'effacement du crochet pour permettre de retirer le pêne de l'élément femelle et ainsi libérer la ceinture. Ces dispositions sont classiques et ne sont pas représentées ici en détail.

Dans l'élément femelle 5 est logée une carcasse métallique 7 présentant deux lumières allongées 8 dans lesquelles est guidée une barrette isolante 10 mobile contre l'action d'un ressort de compression 11 logé dans la carcasse 7.

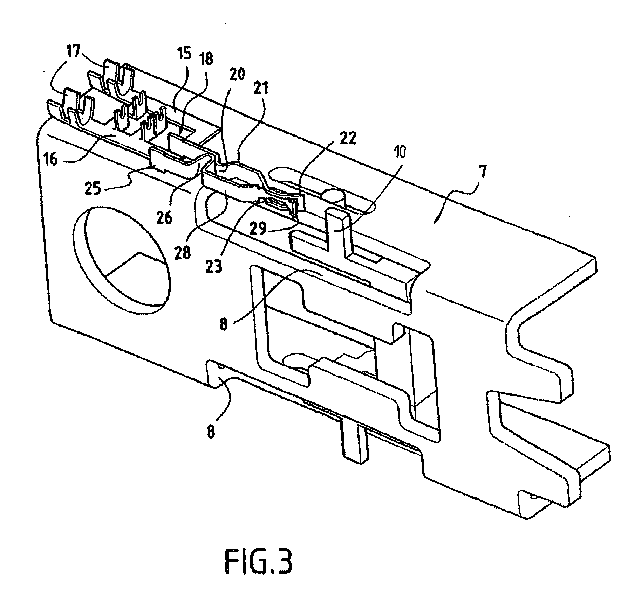

Sur le côté de la carcasse sont disposés des circuits 15 et 16 destinés à être insérés sur un circuit d'alimentation des moyens de signalisation (voir figure 3).

De préférence, les circuits 15 et 16 sont des circuits découpés dans lesquels sont conformées des pattes de sertissage 17 pour le branchement de conducteurs électriques.

Le circuit 15 est conformé pour présenter une languette allongée 18 présentant une partie pliée en V pour présenter deux branches 19 et 20, la branche 20 étant raccordée à une partie rectiligne 21 formant un coude avec la branche 20 et terminée par une partie en arc de cercle 22 percée d'une fente 23. Les parties convexes du V et de la partie en arc de cercle sont tournées du même côté en regard d'une languette complémentaire 25 conformée dans le circuit 16.

La languette complémentaire 25 est pliée pour présenter successivement une partie en V avec deux branches 26 et 27, une partie rectiligne 28 formant un coude avec la branche 27 et une partie terminale en arc de cercle 29 traversant la fente 23.

Les convexités des parties en V et en arc de cercle de la languette complémentaire sont tournées en regard de la languette 18.

Les parties en V des deux languettes 18 et 25 sont disposées de manière, qu'en position de repos, la branche 27 porte contre la branche 19, ces branches constituant les contacts électriques du type glissant afin d'assurer un auto-nettoyage.

Les extrémités libres des parties terminales 22 et 29 sont disposées sur le trajet de la barrette isolante 10.

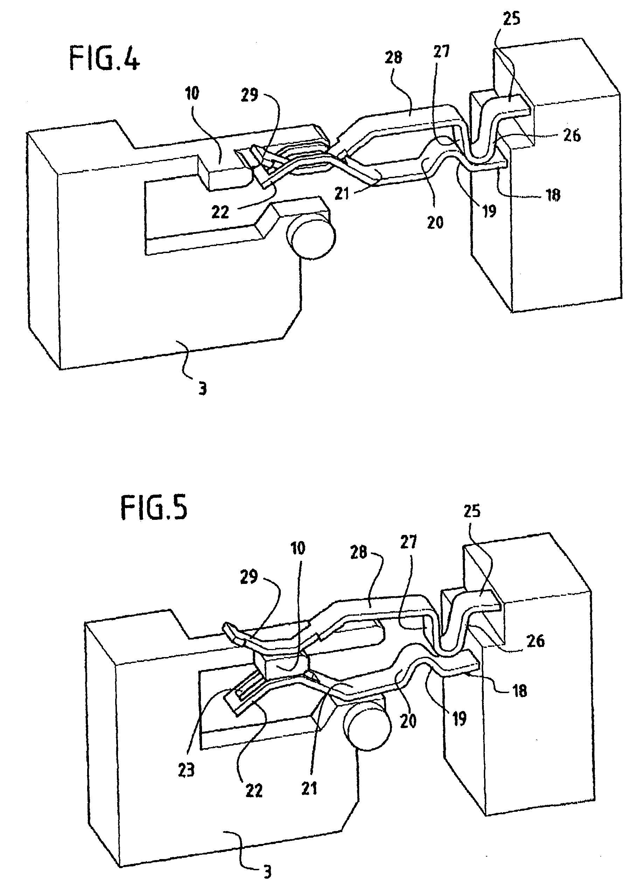

Lors de l'introduction du pêne 3 dans la fente 6 celui-ci pousse la barrette isolante 10 contre l'action du ressort 11, celle-ci venant s'insérer entre les deux parties terminales 22 et 29 de sorte que la branche 27 et la branche 19 sont écartées élastiquement l'une de l'autre ouvrant ainsi le circuit. On conçoit que, grâce à cette disposition, les contacts électriques du type glissant s'écartent et se referment pratiquement sans frottements (voir figures 4 et 5).

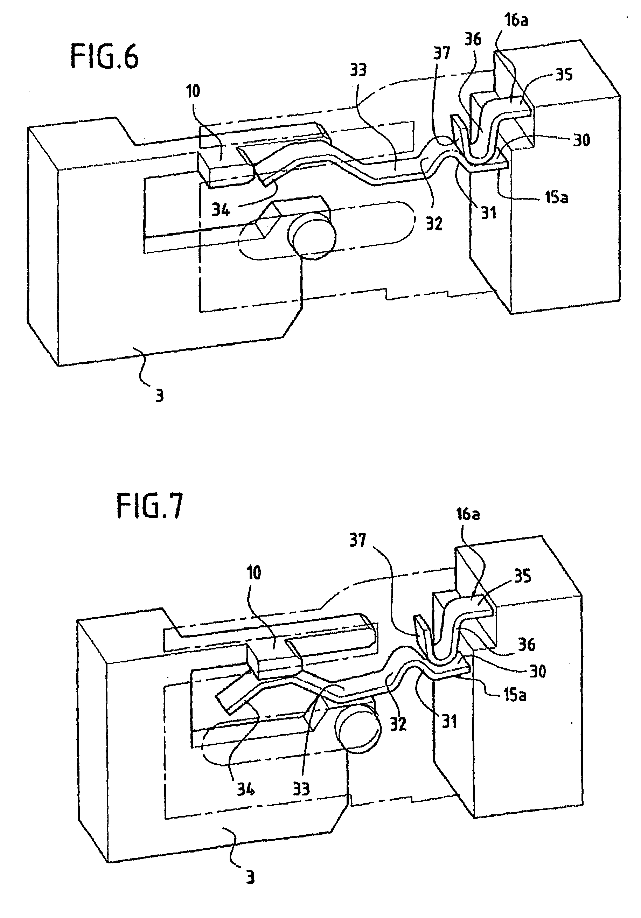

Aux figures 6 et 7, on a représenté une variante de réalisation dans laquelle le circuit électrique 15a comporte une languette 30 présentant une partie en V avec deux branches 31 et 32, la branche 32 étant prolongée par une partie rectiligne 33 terminée par une partie arquée 34, tandis que le circuit 16a est pourvu d'une languette 35 avec une partie terminale en V avec deux branches 36 et 37.

Les branches 31 et 37 constituent les zones de contacts électriques qui, comme dans les réalisations précédentes, sont du type à contact glissant.

Lorsque la boucle n'est pas fermée, la branche 37 coopère avec la branche 31 de manière à fermer le circuit des moyens de signalisation, tandis que lorsque le pêne est introduit dans la fente, il pousse la barrette 10 qui vient coopérer avec la partie 34 afin d'écarter la boucle 31 de la branche 37.

Bien entendu, l'invention n'est pas limitée aux modes de réalisation qui viennent d'être décrits et représentés. On pourra y apporter de nombreuses modifications de détail sans sortir pour cela du cadre des revendications.

## Revendications

1. Boucle de ceinture de sécurité de véhicule automobile du type comprenant un élément femelle (5) constitué par un boîtier isolant dans lequel sont logés des circuits d'alimentation électriques de moyens de signalisation de la fermeture, ou de l'ouverture de la boucle, lesdits circuits comprenant des contacts électriques maintenus en position de fermeture et susceptibles d'être écartés par une barrette isolante mobile (10) dans le boîtier contre l'action de moyens élastiques (11), et un élément mâle (1) monté sur la ceinture et présentant un pêne (3) destiné à être engagé dans une fente de l'élément femelle (5) et à être bloqué dans celle-ci par des organes déverrouillables (9), l'introduction dudit pêne (3) dans la fente (6) engendrant le déplacement de la barrette (10) qui commande l'ouverture des contacts électriques, ladite boucle de ceinture de sécurité étant **caractérisée en ce que** les contacts électriques sont portés par deux languettes (30, 35), une première languette (30) comportant une partie en V avec deux branches (31, 32) dont l'une constitue un contact électrique et une extrémité cambrée (34), les convexités de ces deux parties étant tournées en regard de la seconde languette (35) qui présente une partie en V avec deux branches (36, 37) dont l'une constitue un contact électrique et est destinée à porter contre le contact électrique de la première languette 30, la partie cambrée (34) étant destinée à coopérer avec la barrette (10) pour commander l'ouverture des contacts électriques.

2. Boucle de ceinture de sécurité de véhicule automobile, selon la revendication 1, **caractérisée en ce que** la seconde languette (25) est prolongée par une partie cambrée (29) dont la convexité est tournée en regard de la partie cambrée (22) de la première languette (18).

3. Boucle de ceinture de sécurité de véhicule automobile, selon la revendication 2, **caractérisée en ce que** la partie cambrée de l'une des languettes (18) est percée d'une ouverture (23) dans laquelle s'insère la partie cambrée (29) de l'autre languette (25).

4. Boucle de ceinture de sécurité de véhicule automobile, selon la revendication 1, **caractérisée en ce que** les contacts électriques sont du type à contact glissant.

## Claims

1. Buckle of a seat belt of a motor vehicle of the type comprising a female element (5) consisting of an insulating housing in which electric feed circuits are housed for means of indicating the closure or opening of the buckle, said circuits comprising electric contacts that are kept in a closed position and can be separated by a mobile insulating bar (10) in the housing against the action of elastic means (11), and a male element (1) mounted on the belt and comprising a pin (3) designed to be engaged in a slot of the female element (5) and to be clamped in the latter by unlockable elements (9), the introduction of said pin (3) in the slot (6) causing the movement of the bar (10) which controls the opening of the electric contacts, the said buckle of the seat belt being **characterised in that** the electric contacts are carried by two tongues (30, 35), a first tongue (30) having a V-shaped section with two branches (31, 32), one of which constitutes an electric contact and a cambered end (34), the convex sections of these two parts facing opposite the second tongue (35) which has a V-shaped section with branches (36, 37), one of which constitutes an electric contact and is designed to bear against the electric contact of the first tongue (30), the cambered section (34) being designed to interact with the bar (10) to control the opening of the electric contacts.

2. Buckle of a seat belt of a motor vehicle according to claim 1, **characterised in that** the second tongue (25) is extended by a cambered section (29) the convex section of which is opposite the cambered section (22) of the first tongue (18).

3. Buckle of a seat belt of a motor vehicle according to claim 2, **characterised in that** the cambered section of one of the tongues (18) is pierced by an opening (23) in which the cambered section (29) of the other tongue (25) is inserted.

4. Buckle of a seat belt of a motor vehicle according to claim 1, **characterised in that** the electric contacts are of the sliding contact type.

## Patentansprüche

1. Gurtschloss in einem Kraftfahrzeug, das ein aufnehmendes Element (5) umfasst, das aus einem Isolierstoffgehäuse gebildet ist, in dem Schaltungen zur Stromversorgung von Mitteln zum Signalisieren des Schließens oder Öffnens des Schlosses untergebracht sind, wobei die Schaltungen elektrische Kontakte umfassen, die geschlossen gehalten werden und von einem beweglichen Isoliersteg (10) in dem Gehäuse gegen die Wirkung von elastischen Mitteln (11) voneinander getrennt werden können, und ein Einsteckelement (1), das an dem Gurt befestigt ist und einen Riegel (3) aufweist, der dafür bestimmt ist, in einen Schlitz des aufnehmenden Elements (5) gesteckt und darin mit entriegelbaren Elementen (9) gesichert zu werden, wobei das Einführen des Riegels (3) in den Schlitz (6) das Verschieben des Stegs (10) bewirkt, der das Öffnen der elektrischen Kontakte steuert, wobei das Gurtschloss **dadurch gekennzeichnet ist, dass** die elektrischen Kontakte von zwei Federn (30, 35) getragen werden, wobei eine erste Feder (30) einen V-förmigen Abschnitt mit zwei Schenkeln (31, 32), von denen einer einen elektrischen Kontakt bildet, und ein gewölbtes Ende (34) aufweist, wobei die konvexen Wölbungen dieser beiden Abschnitte so gedreht sind, dass sie der zweiten Feder (35) gegenüberliegen, die einen V-förmigen Abschnitt mit zwei Schenkeln (36, 37) aufweist, von denen einer einen elektrischen Kontakt bildet und dafür bestimmt ist, an dem elektrischen Kontakt der ersten Feder (30) anzuliegen, wobei der gewölbte Abschnitt (34) dafür bestimmt ist, mit dem Steg (10) zusammenzuwirken, um das Öffnen der elektrischen Kontakte zu steuern.

2. Gurtschloss in einem Kraftfahrzeug nach Anspruch 1, **dadurch gekennzeichnet, dass** die zweite Feder (25) mit einem gewölbten Abschnitt (29) verlängert ist, dessen konvexe Wölbung so gedreht ist, dass sie dem gewölbten Abschnitt (22) der ersten Feder (18) gegenüberliegt.

3. Gurtschloss in einem Kraftfahrzeug nach Anspruch 2, **dadurch gekennzeichnet, dass** der gewölbte Abschnitt einer der Federn (18) mit einer Öffnung (23) versehen ist, in die sich der gewölbte Abschnitt (29) der anderen Feder (25) schiebt.

4. Gurtschloss in einem Kraftfahrzeug nach Anspruch 1, **dadurch gekennzeichnet, dass** die elektrischen Kontakte Gleitkontakte sind.
